# EUROPEAN PATENT APPLICATION

(11) **EP 2 380 450 A1**
(43) Date of publication of application: **26.10.2011**
(21) Application number: 10178147.4
(22) Date of filing: 22.09.2010
(51) Int. Cl.: A42B 3/04

(54) **Aerodynamic bicycle helmet**

(30) Priority: 23.04.2010 US 766212; 04.08.2010 US 850211
(71) Applicant: Felt Racing, LLC, Irvine, California 92618 (US)
(72) Inventor: Felt, James Michael, Auburn, CA 95602 (US)
(74) Representative: Gervasi, Gemma

(57) **Abstract**

An aerodynamic bicycle helmet (10,12) for decreasing coefficient of drag when a head of a rider (50) is in a down position, the helmet (10,12) comprising:
a cushion with a concave cavity for receiving the head of the rider (50);
a strap (54) attached to the cushion for maintaining the cushion on the head of rider (50) in the event of a crash;
an exterior shell disposed over the cushion, the exterior shell having a leading portion (26,44) with a parabolic or spherical configuration, the leading portion (26,44) positioned on a top portion of the head of the rider (50) when the helmet (10,12) is worn by the rider.

## Description

### BACKGROUND

The present invention relates to a helmet for a bicycle and a frontal viewing system configured to facilitate reduction of aerodynamic drag associated with a riding position on a bicycle.

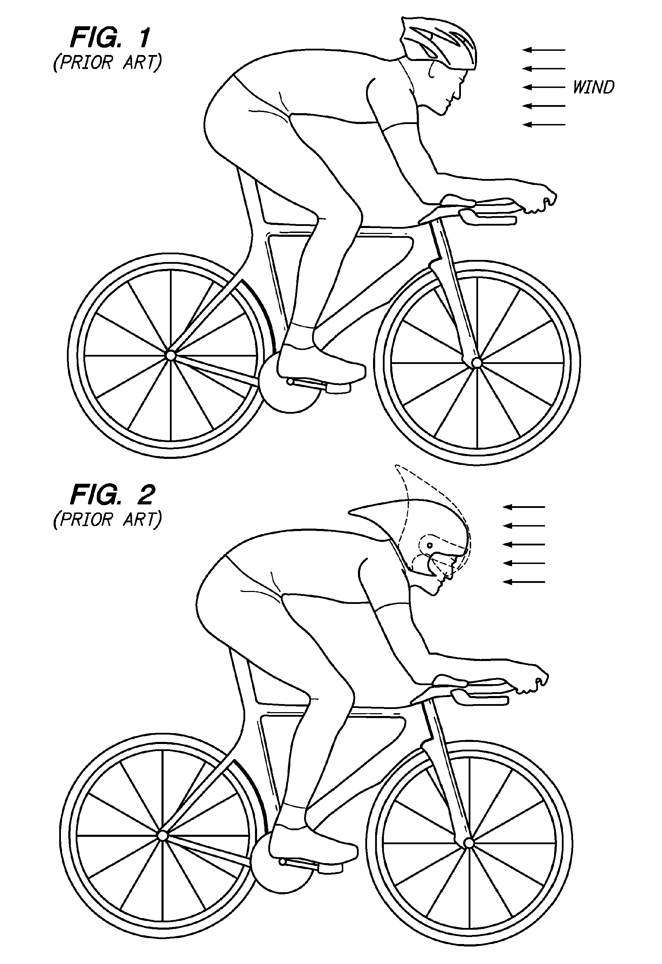

Helmets are worn by bicycle riders to protect the rider's head in the event of a crash. The helmet absorbs the shock of the crash instead of the rider's head. Road bicycles at competition levels exceed speeds of 25 miles per hour. If a rim breaks, or cars and other cyclists crash into the bicycle rider, the bicycle rider may fall to the ground in a violent and uncontrolled motion. The helmet protects the rider's head from unintended contact with the pavement, other cyclists, automobiles, etc. The helmet absorbs the shock impact instead of the rider's head. Figures 1 and 2 illustrate prior art bicycle helmets. Figure 1 illustrates a typical road bicycle helmet for recreational use. The helmet incorporates holes to provide air flow through the helmet so that the rider's head does not overheat during the bike ride. Unfortunately, due to the discontinuities formed by the apertures in the helmet as well as the rider's facial features, there is an increased coefficient of drag. Additionally, the back side of the helmet produces an area of low pressure which provides an overall rearward pressure differential to the rider's head. Although these sources of drag may be characterized in recreational riding as minute, by competition level standards, all minute sources of friction and drag may be considered to be significant.

Referring to Figure 2, a different type of bicycle helmet is shown. The bicycle helmet does not incorporate apertures for providing air flow through the helmet to cool down the rider's head during a bike ride. The helmet places aerodynamics over comfort. Additionally, the rider's face is pointed forward and exposed to the oncoming wind so that the rider's eyes may survey the upcoming terrain and avoid any obstacles in front of him/her without crashing. In this position, the tail portion is blended to the rider's back. Unfortunately, the bicycle rider must still look upwards so that the rider's face is in the direction of wind flow. The rider's face increases the coefficient of drag while the rider is looking forward. Also, the rider's neck will be strained for having to look up all the time. Additionally, when the rider looks downward, the tail portion is raised upward as shown by the hidden lines. The back side of the tail portion experiences low pressure which provides a net backward force on the tail portion thereby slowing the rider down.

In both prior art Figures 1 and 2, the rider's head is cocked upward. During long rides, the rider must maintain this head up position so that the rider can keep track of obstacles in front of his/her path. Unfortunately, this is not a comfortable position. This up position creates neck strain thereby causing discomfort and potential long term physical problems to the rider.

In a related aspect of cycling, a common goal across the sport of cycling includes maximizing the aerodynamic efficiency of the bicyclist and the bicycle to achieve faster speeds, greater control and better overall results. In the sport of cycling, a fraction of a second can have a profound impact on the outcome of a race. The power generated by a bicyclist has its human limitations. Aerodynamics is an area where cycling enthusiasts and researchers alike look to improve performance. The main obstacle to aerodynamic efficiency at high speeds is wind resistance. Every bicyclist has to overcome wind resistance. Most recreational bicycles in which the bicyclist is seated in an upright riding position have very poor aerodynamics. While new bicycles are being designed with better aerodynamics in mind, the human body is simply not well designed to maneuver through air. Bicycling enthusiasts have been keenly aware of the problem of wind resistance and over the years have developed techniques for enhancing the aerodynamic efficiency of the bicycle and the bicyclist.

Aerodynamic drag consists of two forces: air pressure drag and direct friction (skin friction). A blunt, irregular object such as the human body disturbs the air flowing around it, forcing the air to separate from the body's surface. Low pressure regions from behind the body result in a pressure drag against the body. With high pressure in the front, and low pressure behind, the bicyclist is literally being pulled backwards. Streamlined designs help the air flow more smoothly around the body and reduce pressure drag. Direct friction occurs when wind comes into contact with the outer surface of the bicyclist and the bicycle. Racing bicyclists often wear special skin tight suits in order to reduce direct friction. Direct friction is less of a factor than air pressure drag.

Aerodynamic drag plays an important role in cycling. For example, at speeds of 8 mph or greater the aerodynamic drag of a bicycle and rider is greater than the rolling resistance. When the speed is increased to 20 mph, the aerodynamic drag is more than 80% of the total drag. There are several areas for aerodynamic improvement. The most important area is associated with the positioning of the bicyclist. The bicyclist may account for 65% to 80% of the drag. Therefore, the bicyclist's position is very important to the overall aerodynamics. Research using wind tunnels and coast down tests has shown that proper body position can reduce drag by 31% over an upright riding position. The farther forward (closer to front wheel) the center of mass of the combined bicyclist and bicycle, the less the front wheel has to move laterally in order to maintain balance. Conversely, the further back (closer to the rear wheel) the center of mass is located, the more front wheel lateral movement or bicycle forward motion will be required to regain balance. In order to move forward, the bicyclist must push through the mass of air in front. Moving forward through the mass of air requires energy. Aerodynamic efficiency (a streamlined shape that cuts through the air more smoothly) enables a bicyclist to travel much faster, with less effort. But the faster the bicyclist is traveling, the more wind resistance is experienced, and the more energy is required to overcome the resistance. When bicyclists aim to reach high speeds, they focus not only on greater power, which has its human limitations, but also on greater aerodynamic efficiency. The aid of technology has enabled many improvements to the bicycle components for reducing aerodynamic drag. In addition to the components, accessories have gained from special designs configured to reduce the aerodynamic drag. One example is the use of a helmet which can help to decrease the aerodynamic drag that a bicyclist encounters. An aerodynamic bicycle helmet may reduce the drag by approximately 2% over a bicyclist with no helmet. Also improvements to the bicycle handlebar such as using an airfoil design has helped maximize aerodynamic efficiency. While improvements to frames and components have improved aerodynamic performance, the bicyclist remains the largest obstacle to dramatic improvement. Riding position is important because the human body is not inherently streamlined. However, certain riding positions contort the human body into a more streamlined position. Some bicycles include "drop bars" to facilitate a position to minimize the front area of the bicyclist. Minimizing the front area reduces the amount of resistance that must be overcome by the bicyclist. Less resistance translates into increased speed and efficiency. The drop bars enable the bicyclist to shift his or her center of mass closer to the front wheel.

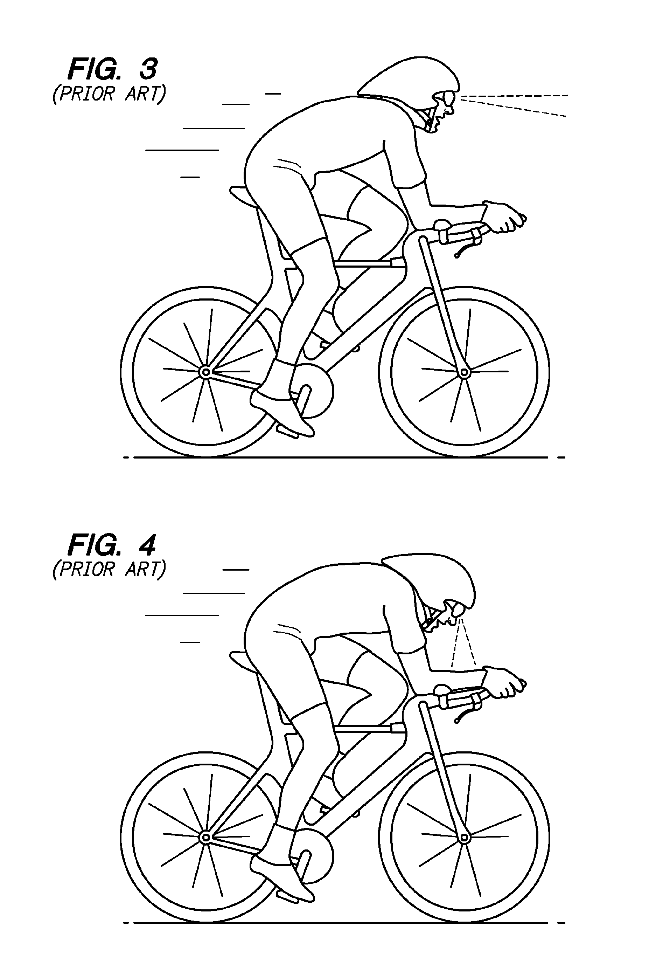

With reference to Fig. 3, a bicyclist sitting in a crouched position on the bicycle is provided. The improvement in aerodynamic efficiency over the bicyclist sitting upright on the bicycle is well known in the art. However, even in the crouched position the bicyclist may experience significant wind resistance. The line of sight of the bicyclist is straight ahead to an area in front of the bicycle. As a result, the front portion of the bicyclist's head blocks the wind and experiences increased resistance as speed increases. Therefore, the front portion of the bicyclist's head is an area of high pressure. Conversely, the area directly behind the head is an area of low pressure due to the front portion blocking the wind. The pressure difference between the front and back portion of the head generates a dragging force pulling the bicyclist backward. Referring now to Fig. 4, the bicyclist's line of sight is downward instead of straight ahead in front of the bicycle. The change in position of the bicyclist's head reduces the front area that experiences wind resistance. As a result, the pressure difference between the front and back portion of the bicyclist's head is significantly reduced. Thus, the bicyclist's position corresponds to increased aerodynamic efficiency.

However, there is a delicate balance between the most efficient riding position (one which reduces drag) and comfort and safety of the rider. Some positions that may result in enhanced aerodynamic efficiency may not be practical due to safety concerns or simply the comfort of the bicyclist. The balance arises from the general limitations of the human body that must be considered. As described above, the reduction of the bicyclist's frontal area reduces the amount of resistance that must be overcome. One way to accomplish this is a lowered head position where the head is positioned such that the line of sight is directed downward. The lowered head position is impractical because it reduces the bicyclist's ability to see the area in front of the bicycle. This position may put the bicyclist at an increased risk of injury due to the limited line of sight. The bicyclist may be more prone to an accident or collision. Accordingly, there is a need in the art for an improved bicycle helmet. Additionally, there exists a need in the art for a system which allows the rider to keep his/her head in the down position for an extended period of time.

### BRIEF SUMMARY

The helmet and the front viewing system discussed herein address the problems identified above, identified below and those that are known in the art.

The helmet may define a leading portion located generally at the top of the rider's head when the helmet is worn by the rider. The leading portion may have a spherical or parabolic configuration so that when the rider is in the aggressive stance or posture and the rider's head is in the down position, the leading portion of the helmet initially contacts the oncoming wind and splits the wind above and below as well as from side-to-side around the helmet. Preferably, the wind flows in a laminar flow over the helmet so as to reduce the coefficient of drag. The helmet may further have a tail portion which extends from the back rear of the helmet and is blended to the back surface of the rider's back. Alternatively, the helmet may have a trailing surface which follows a contour of the rider's head.

The helmet may define a leading portion located generally at the top of the rider's head when the helmet is worn by the rider. The leading portion may have a spherical or parabolic configuration so that when the rider is in the aggressive stance or posture and the rider's head is in the down position, the leading portion of the helmet initially contacts the oncoming wind and splits the wind above and below as well as from side-to-side around the helmet. Preferably, the wind flows in a laminar flow over the helmet so as to reduce the coefficient of drag. The helmet may further have a tail portion which extends from the back rear of the helmet and is blended to the back surface of the rider's back. Alternatively, the helmet may have a trailing surface which follows a contour of the rider's head.

More particularly, an aerodynamic bicycle helmet for decreasing coefficient of drag when a head of a rider is in a down position is disclosed. The helmet may comprise a cushion, a strap and an exterior shell. The cushion may have a concave cavity for receiving the head of the rider. The strap may be attached to the cushion for maintaining the cushion on the head of rider in the event of a crash. The exterior shell may be disposed over the cushion. The exterior shell may have a leading portion with a parabolic configuration. The parabolic leading portion may be positioned on a top portion of the head of the rider when the helmet is worn by the rider.

The helmet may further have an eye shield attached to the exterior shell for blocking wind to the eyes of the rider. The exterior shell may be continuous and smooth so that the exterior shell does not incorporate cooling vents. The parabolic leading portion may be symmetrical about a medial axis which is generally aligned to a spine of the rider when the helmet is worn by the rider. The external shell may have a tail portion aerodynamically blended to a back surface of the rider. Alternatively, the external shell may have a trailing surface which follows a contour of the rider's head.

In an alternate embodiment, an aerodynamic bicycle helmet for decreasing coefficient of drag when a head of a rider is in a down position is disclosed. The helmet may comprise a cushion, a strap and an exterior shell. The cushion may have a concave cavity for receiving the head of the rider. The strap may be attached to the cushion for maintaining the cushion on the head of rider in the event of a crash. The exterior shell may be disposed over the cushion. The exterior shell may have a leading portion with a spherical configuration. The spherical leading portion may be positioned on a top portion of the head of the rider when the helmet is worn by the rider.

The helmet may further have an eye shield attached to the exterior shell for blocking wind to the eyes of the rider. The exterior shell of the helmet may be continuous and smooth without any cooling vents. The spherical leading portion may be symmetrical about a medial axis which is generally aligned to a spine of the rider when the helmet is worn by the rider. The external shell may have a tail portion aerodynamically blended to a back surface of the rider. Alternatively, the external shell may have a trailing surface which follows a contour of the rider's head.

A bicycle riding system is also disclosed. The system may comprise the improved aerodynamic helmet used in conjunction with a front viewing system.

The aerodynamic bicycle helmet may decrease coefficient of drag when a head of a rider is in a down position. In particular, the helmet may comprise a cushion, a strap and an exterior shell. The cushion may have a concave cavity for receiving the head of the rider. The strap may be attached to the cushion for maintaining the cushion on the head of rider in the event of a crash. The exterior shell may be disposed over the cushion. The exterior shell may have a leading portion with a spherical or a parabolic configuration. The leading portion may be positioned on a top portion of the head of the rider when the helmet is worn by the rider.

The bicycle may comprise a front wheel, a rear wheel, a frame with the front and rear wheels attached to the frame, a handlebar attached to the front wheel and the frame for steering the front wheel, and a video system with a camera positioned to provide a front view of the bicycle path and a video screen to provide the front view of the bicycle path. The video screen may be mounted to the handlebar so that the rider can view the video screen while the rider maintains his/her head in the down position.

In relation to the front viewing system, the same may be a video based system which facilitates an aerodynamic positioning of a bicyclist. The bicycle video system includes a video display. The video display is used by the bicyclist to view an area in front of the bicycle. The video display allows the bicyclist to ride while maintaining a lowered head position instead of a raised head position to see the area in front of the bicycle that may be viewed by the bicyclist. The video display may be positioned in a plurality of locations as long as the video display enables the bicyclist to ride with a lowered head position. The bicycle video system also includes a video camera. The video camera is in electrical communication with the video display. The video camera is positioned in a direction toward the front of the bicycle to capture images in front of the bicycle. The video camera may transmit a video signal representative of a real-time image of an area in front of the bicycle to the video display. As a result, the video display may constantly receive real-time images of an area in front of the bicycle enabling the bicyclist to maintain a lowered head position for better aerodynamics.

In a first embodiment, a bicycle video system includes a bicycle handlebar. The bicycle handlebar defines a top surface. The bicycle handlebar is also configured for attachment to a bicycle frame. In this regard, the bicycle video system is incorporated into the bicycle handlebar. The bicycle video system includes a video display coupled to the top surface of the bicycle handlebar. A video camera is coupled to the bicycle handlebar. The video camera is directed towards an area in front of the bicycle handlebar. The video display and the video camera are in electrical communication with each other. The video display receives a signal representative of a real-time image generated by the video camera. Through the use of a video camera and a video display, the bicycle handlebar facilitates a lowered head riding position on the bicycle which minimizes the pressure drag associated with the bicyclist. The video camera feeds real time images directly to the video display for immediate observation.

Because the video camera is disposed on the bicycle handlebar, the video camera is able to capture real time images directly in front of the bicycle similar to the views of a bicyclist riding with a raised head position.

Without the video camera and the video display, the bicyclist may be inclined to keep his or her head elevated to view the area in front of the bicycle. However, the elevated head of the bicyclist generates a high pressure region in front of the bicyclist's head. This is caused by the wind contacting the surface area of the bicyclist's head. Conversely, the region directly behind the bicyclist's elevated head is a low pressure region because the front surface area of the bicyclist's head blocks the wind. The pressure difference between the front and rear portion of the elevated head results in back pressure drag that negatively affects the aerodynamic efficiency of the bicyclist. The video camera and the video display disposed on the bicycle handlebar allow the bicyclist to maintain a lowered head position while viewing the area in front of the bicycle on the video display. The lowered head position minimizes the pressure difference between the front and rear portion of the head, resulting in a streamlined position. The pressure at the front portion of the lowered head is minimized because less surface area is exposed to the wind resistance.

In more detail, the bicycle handlebar may include an elongated body with a first end and a second opposing end. The elongated body defines a longitudinal axis extending along the elongated body from one opposing end to the other opposing end. Additionally, the elongated body of the handlebar includes a central area generally equidistant from the first end and the second opposing end. The bicycle handlebar may also include a handlebar stem configured to extend away from the central area of the elongated body. The elongated body and the handlebar stem may form a unitary piece comprising the bicycle handlebar. The handlebar stem may define a stem axis orthogonal to and intersecting the longitudinal axis. The stem axis is configured to generally align with the bicycle frame when the bicycle handlebar is attached to the bicycle frame. In this regard, the handlebar stem is connectable to the bicycle frame. The handlebar stem may be connected to the bicycle frame by a screw fastener or any other well known method in the art. The shape of the bicycle handlebar may be defined by the outer periphery of the elongated body and the handlebar stem. A video camera is coupled to the outer periphery of the elongated body of the handlebar. The video camera is coupled to the elongated body such that the video camera lens is directed toward an area in front of the bicycle handlebar and away from the bicycle frame. The bicycle handlebar also includes a video display disposed within the central area of the elongated body. The video display is positioned adjacent the handlebar stem.

The handlebar stem may be connected to the bicycle frame via a bicycle fork also known as the front fork. The front fork is the portion of the bicycle that holds the front wheel and allows the rider to steer and balance the bicycle. The first end and the second opposing end of the elongated body may also include a pair of handlebar grips attached thereto.

The video camera may also be disposed within the outer periphery of the elongated body along the stem axis spaced substantially equidistant from the first and second opposing end of the elongated body. The placement of the video camera enables the viewing by the video camera resembling the area viewed by the bicyclist with an elevated head position and a line of sight in the forward direction. Additionally, the video display may be pivotally coupled to the elongated body. As a result, the position of the video display is adjustable. For example the video display may be adjustable between 0 and 45 degrees relative to the elongated body. However, it is preferred that the video display is flush with the elongated body to minimize drag experienced by the bicycle handlebar. The video display is configured to receive a continuous signal representative of real-time images generated and transmitted by the video camera. The video camera and the video display may be battery powered.

In a second embodiment of the system, a handlebar mounted bicycle video system is provided. The bicycle handlebar mount is configured to attach to a bicycle handlebar. In this regard the mount may be a clamp or any similar device used to attach to the bicycle handlebar. The mount is configured to rigidly attach to the bicycle handlebar. A video camera is disposed within the bicycle handlebar mount. The video camera is positioned in a manner such that the video camera is directed toward an area in front of the bicycle handlebar. The video camera is configured to capture real time images similar to the image a bicyclist with an elevated head position may view. The handlebar mounted bicycle video system also includes a flexible shaft. The flexible shaft extends from the bicycle handlebar mount. The flexible shaft includes a proximal end and a distal end. The proximal end of the flexible shaft is coupled to the bicycle handlebar mount. A video display is also associated with the handlebar mounted bicycle video system. The video display is in electrical communication with the video camera for receiving a signal representative of real time images of the area in front of the bicycle handlebar. The video display is coupled to the distal end of the flexible shaft. The configuration of the flexible shaft allows for the video display to be positioned wherein the bicyclist may view the video display while minimizing aerodynamic drag associated with the riding position. Furthermore, the flexible shaft may be adjusted to change the positioning of the video display.

In relation to the video based front viewing system, a method of displaying a real-time image generated by a video camera coupled to a bicycle frame is provided. A video display is coupled to a bicycle handlebar attached to the bicycle frame. The method includes positioning the video camera in a direction forward of the bicycle frame. The method continues by optically sensing a scene forward of the bicycle frame using the video camera coupled to the bicycle frame. The video camera may defines a viewing axis parallel to the scene forward of the bicycle. The video signal generated by the video camera is transmitted to the video display. The video display may be positioned adjacent to the viewing axis such that the bicyclist may look down to view the video display. The video display is configured to display real time images in response to receiving the video signal from the video camera. The method enables the bicyclist to maintain a lowered head position. Without a continuous display of real time images of an area forward of the bicycle the bicyclist may be less inclined to maintain a lowered head position.

Further in relation to the viewing system, the same may be a mirror based system. The mirror based viewing system may be incorporated into an eyewear on the rider's head (e.g., eyeglass, etc.) or incorporated onto the handlebar of the bicycle. Although the mirror based front viewing system is described as being used in conjunction with the aerodynamic helmets disclosed herein, the mirror based viewing system can be used alone or with other helmets. Also, the helmet may be used alone or in conjunction with the video or mirror based front viewing system.

In an aspect of the mirror based eyewear viewing system, the same may be used for viewing a front path of a bicycle while a rider's head is in a down position. The eyewear may comprise left and right optics each having at least one mirror oriented so that the rider can view upcoming terrain when the rider's head is in the down position and a means for securing the left and right optics in front of the wearer's eyes.

The means for securing may comprise an eyeglass frame with the left and right optics attached thereto. The means for securing may alternatively comprise a visor of a helmet. The mirror may be parabolic for a wider field of view.

In relation to the mirror based handlebar front viewing system, the front viewing system may be mounted to a bicycle for viewing a front path of a bicycle while a rider's head is in a down position. The system may comprise at least one mirror and a housing for encasing the at least one mirror. The at least one mirror may be mounted to the bicycle proximate a handlebar region of the bicycle. The mirror may be oriented so that the rider can view upcoming terrain when the rider's head is in the down position. The mirror may be parabolic for a wider field of view.

The viewing system may further comprise a clamp attached to the housing for securing the front viewing system to a handlebar of the bicycle.

The front viewing system disclosed herein may be used in conjunction with an aerodynamic helmet. In particular, a bicycle aerodynamic kit comprising an aerodynamic bicycle helmet and a mirror based front viewing system is disclosed. The aerodynamic bicycle helmet may be provided for the purpose of decreasing coefficient of drag when the head of the rider is in the down position. The helmet may comprise a cushion, a strap, and an exterior shell. The cushion may have a concave cavity for receiving the head of the rider. The strap may be attached to the cushion for maintaining the cushion on the head of rider in the event of a crash. The exterior shell may be disposed over the cushion. The exterior shell may have a leading portion with a parabolic configuration. The parabolic leading portion may be positioned on a top portion of the head of the rider when the helmet is worn by the rider. The mirror based front viewing system may enable the rider to view upcoming terrain while the rider's head is in the down position.

The front viewing system may be an eyeglass incorporating a mirror that is positioned to reflect the upcoming terrain of the rider when the rider's head is in the down position. Alternatively, the front viewing system may be mountable to a handlebar region of a bicycle. The front viewing system may reflect the upcoming terrain to the rider when the rider's head is in the down position.

In another embodiment of the kit, the bicycle aerodynamic kit may comprise an aerodynamic bicycle helmet and a mirror based front viewing system. The aerodynamic bicycle helmet may decrease coefficient of drag when a head of a rider is in a down position. The helmet may comprise a cushion with a concave cavity for receiving the head of the rider, a strap attached to the cushion for maintaining the cushion on the head of rider in the event of a crash, and an exterior shell disposed over the cushion. The exterior shell may have a leading portion with a spherical configuration. The spherical leading portion may be positioned on a top portion of the head of the rider when the helmet is worn by the rider. The mirror based front viewing system may enable the rider to view upcoming terrain while the rider's head is in the down position.

The front viewing system may be an eyeglass incorporating a mirror that is positioned to reflect the upcoming terrain of the rider when the rider's head is in the down position. Alternatively, the front viewing system may be mounted to a handlebar region of a bicycle. The front display system may reflect the upcoming terrain to the rider when the rider's head is in the down position.

### BRIEF DESCRIPTION OF THE DRAWINGS

These and other features and advantages of the various embodiments disclosed herein will be better understood with respect to the following description and drawings, in which like numbers refer to like parts throughout, and in which:
Figure 1 is an illustration of a prior art road bicycle helmet;
Figure 2 is an illustration of another embodiment of a prior art road bicycle helmet;
Figure 3 is a perspective view of a bicycle rider with an elevated head position;
Figure 4 is a perspective view of a bicycle rider with a lowered head position;
Figure 5 is a side view of a parabolic shaped helmet;
Figure 6 is a front view of the helmet shown in Figure 5;
Figure 7 is a side view of a second embodiment of a spherical shaped helmet;
Figure 8 is a front view of the helmet shown in Figure 7;
Figure 9 is a perspective view of a first embodiment of a bicycle handlebar video system;
Figure 10 is a second embodiment of the bicycle handlebar video system;
Figure 11 is a third embodiment of the bicycle handlebar video system;
Figure 12 is a perspective view of a front viewing system in accordance with the first embodiment shown in Figure 9;
Figure 13 is a perspective view of the front viewing system in accordance with the second embodiment shown in Figure 10;
Figure 14 is a perspective view of the front viewing system in accordance with the third embodiment shown in Figure 11;
Figure 15 is a side view of a bicyclist wearing a front viewing system in accordance with a fourth embodiment;
Figure 15A is a perspective view of the front viewing system shown in Figure 15;
Figure 15B is a cross sectional view of a right optic of the front viewing system shown in Figure 15A;
Figure 16 is a side view of the front viewing system in accordance with a fifth embodiment;
Figure 17 is a perspective view of the front viewing system shown in Figure 16;
Figure 18 is a perspective view of the front viewing system in accordance with a sixth embodiment;
Figure 18A is a front view of the front viewing system shown in Figure 18; and
Figure 19 is a schematic view of the front viewing system shown in Figures 15-18A.

### DETAILED DESCRIPTION

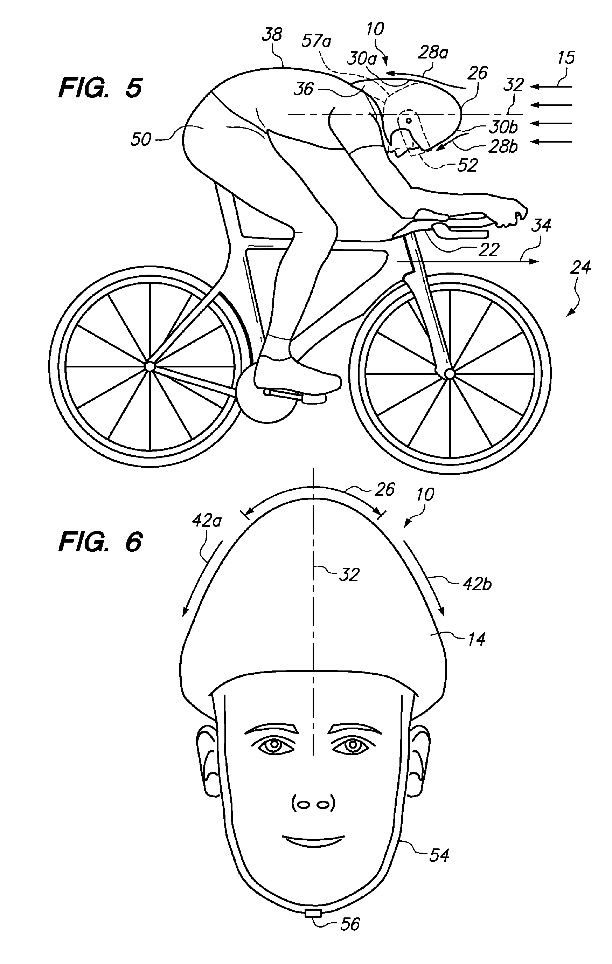

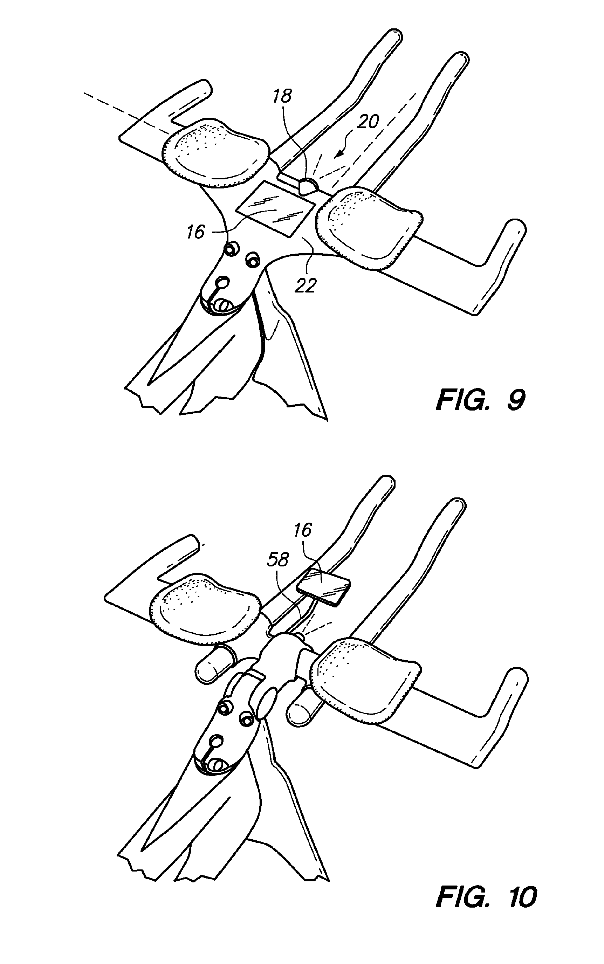

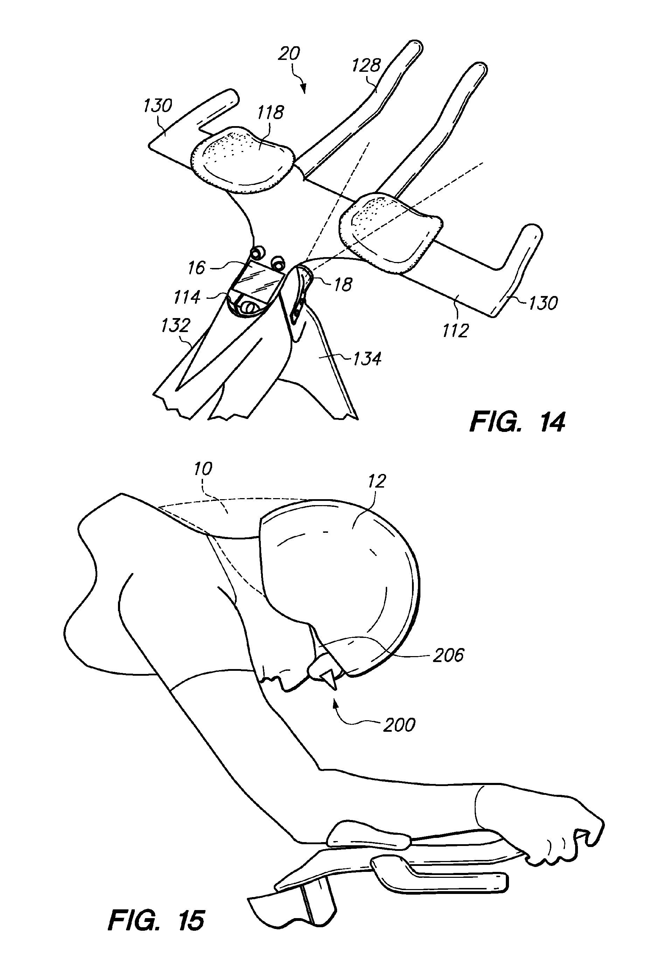

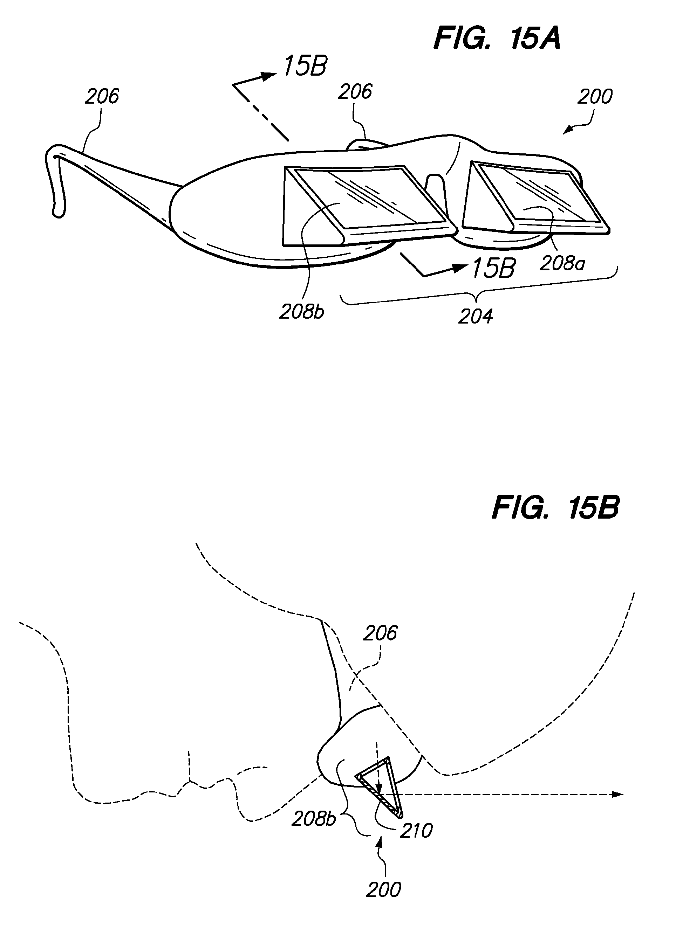

Referring now to the drawings, improved bicycle helmets 10, 12 are shown in Figures 5-8. When the rider's head is in the downward position, the exterior shell 14 forms an aerodynamic leading portion (i.e., parabolic configuration or spherical configuration) to split the air flow 15 around the helmet 10, 12 in a laminar fashion thereby reducing the coefficient of drag caused by the helmet 10, 12 and rider's head. The rider can maintain his/her head in the downward position by installing a bicycle handlebar video system 20 as described in U.S. Pat. App. Ser. No. 12/257,124, filed on October 23, 2008. Alternatively, a mirror based front viewing system 200, 202 (see Figures 15-16A) can be used so that the rider can maintain his/her head in the downward position. In this manner, the rider does not have to intermittently look up to view obstacles in front of the rider's bicycle path. Rather, the rider may look down at a screen 16 or viewing area that displays a frontal view of the rider's bicycle path, as shown in Figures 9-16A. In particular, a camera 18 may be pointed forward and feed images to the screen 16. Alternatively, a front viewing system can be used to reflect the forward view to the rider. The rider may look down at the screen 16 or viewing area to obtain a picture or view of the bicycle's forward path so that the rider can make adjustments to the path as necessary to avoid obstacles. Accordingly, the improved bicycle helmets 10, 12 along with the bicycle handlebar video system 20 or viewing system allows the rider to maintain a comfortable head down position and gain the benefit of an aerodynamic shaped helmet 10, 12. The helmets 10, 12 and the front viewing system including the bicycle handlebars of the viewing system 20 and the rear based front viewing system 200, 202 are discussed in combination with each other but may also be utilized independent from each other. The rider can use the helmets 10, 12 without the front viewing system. Also, the rider can use the front viewing system with other types of helmets.

Referring now to Figures 5 and6, a first embodiment of the helmet 10 is shown. The helmet 10 incorporates a parabolic leading portion 26. When the rider is riding the bicycle 24 and the rider's head is in the downward position, the parabolic leading portion 26 initially contacts the oncoming wind 15 and splits the wind flow around the helmet 10 as shown by arrows 28a, b above and below the helmet 10. When the rider's head is in the downward position, as shown in Figure 5, the upper and lower profiles 30a, b of the helmet 10 are generally symmetrical about axis 32 which may be generally parallel to a forward direction 34 of the bicycle 24. Also, a tail portion 36 of the upper profile 30a may generally blend with a back surface 38 of the rider 40. A low pressure is not created behind the rider's helmet 10 when the rider's head is in the downward position. The air 15 flows over the upper profile 30a and the back surface 38 of the rider 40. The rider does not have to lift up his/her head to look forward since the rider can view the video screen 16 of the bicycle handlebar video system 20 mounted to a handlebar 22, as shown in Figures 9-11 or can view the upcoming terrain by way of the mirror based front viewing systems 200, 202.

More particularly, referring back to Figure 5, during a road race, the rider 50 may be in an aggressive riding posture. In particular, the back of the rider is hunched forward in its lowermost position so that the collective frontal profile of the rider 50 and bicycle 24 is minimized to reduce the coefficient of drag. The rider's head is in the down position so that the neck of the rider is generally straight with the spine of the rider. This allows the rider to reduce or eliminate any neck pain that might be caused by looking up to view the terrain in front of the rider's path. The rider 50 can view the forward view by way of the bicycle handlebar video system 20 or the front viewing system 200, 202 which are discussed herein. In this aggressive riding posture, the rider has a minimal frontal profile to reduce the coefficient of drag. Additionally, the helmet 10 of the rider 50 is shaped to further reduce the coefficient of drag. In particular, when the rider 50 is in the aggressive posture with his/her head in the down position as shown in Figure 5, the helmet 10 may have a leading portion 26 that has a parabolic configuration. The parabolic configuration of the leading portion 26 of the helmet 10 allows the oncoming wind 15 to separate laminarly or less turbulently over the helmet 10 thereby further reducing the coefficient of drag. It is contemplated that the leading portion 26 of the helmet 10 is generally located at the top of the rider's head so that the parabolic leading portion 26 of the helmet 10 initially contacts the oncoming wind 15.

As the wind 15 proceeds backward, the wind 15 is split above and below the helmet 10 as shown by arrow 28a, b. Preferably, the wind 15 maintains laminar flow over the helmet 10. The air flow shown by directional arrow 28a flows over the tail portion 36 of the helmet 10 and over the back surface 38 of the rider 50. Preferably, the tail portion 36 is blended with the back surface 38 of the rider 50 so that the wind 15 maintains laminar flow over the transition between the tail portion 36 of the helmet 10 and the back surface 38 of the rider 50. For the wind 15 that flows below the helmet 10 shown by directional arrow 28b, the air flows over the transparent face mask 52 that is attached to the helmet 10.

Referring now to Figure 6, a front view of the helmet 10 is shown. The leading portion 26 is located at the top of the rider's head. Also, the left and right sides of the helmet 10 are symmetrical about medial axis 32. The helmet 10 additionally has a strap 54 for retaining the helmet 10 on the rider's head in the event of a crash. The strap 54 extends downward from the left and right sides of the helmet 10 and is attached to each other by the clip 56 below the rider's chin. The helmet 10 may also be symmetrical about axis 32 when viewed from the front (see Figure 6) or side (see Figure 5). In this manner, the wind 15 may be separated by the parabolic leading portion 26 of the exterior shell 14 of the helmet 10 front-to-back and side-to-side.

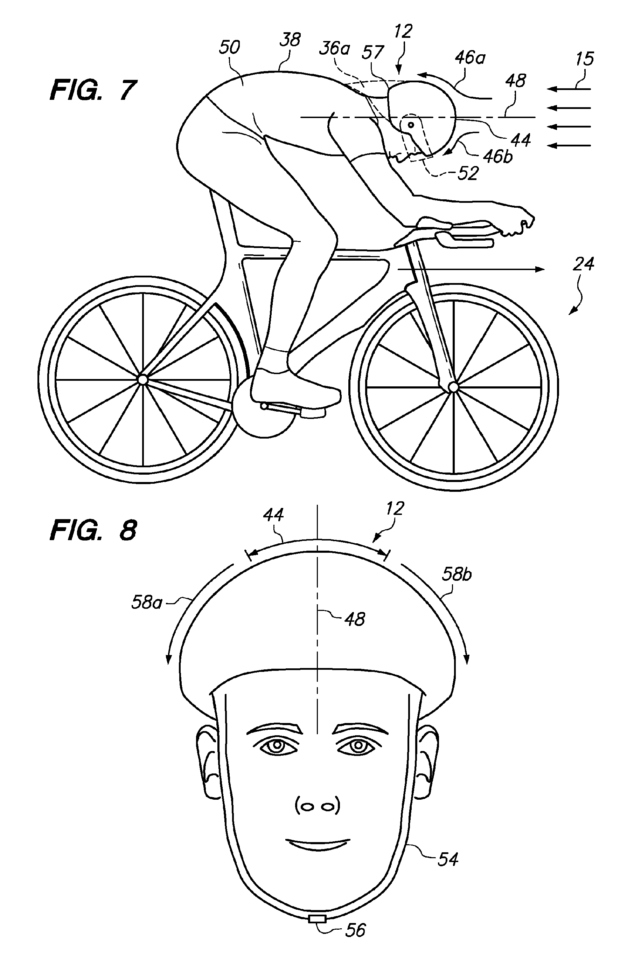

Referring now to Figures 7 and 8, a second embodiment of the helmet 12 is shown. Instead of a parabolic leading portion, the leading portion 44 has a spherical configuration. The wind 15 contacts the leading portion 44 and is split up by the spherical leading portion 44. When the rider 50 is in the aggressive position shown in Figure 7, and the rider's head is looking downward, the oncoming wind 15 initially contacts the spherical leading portion 44. The oncoming wind 15 is diverted above and below the helmet 12 as shown by directional arrow 46a, b. The helmet 12 does not have a rear tail portion 36 that blends with the rider's back surface 38. Rather, the trailing surface 57 follows the contour of the rider's head. This minimizes any low pressure behind the helmet 12 caused by the oncoming wind 15. The oncoming wind 15 flowing in the direction of arrow 46a traverses over the helmet 12 and over the back surface 38 of the rider 50. The oncoming wind 15 also flows under the helmet 12 and under the face mask shown by directional arrow 46b.

Referring now to Figure 8, the spherical leading portion 44 is also generally located at the top of the rider's head. The wind 15 when the rider 50 is in the aggressive position with his/her head in the down position contacts the spherical leading portion 44 and splits to the left and right sides of the helmet 12 as shown by arrows 58a, b. Preferably, the left or right sides of the helmet 12 are symmetrical about medial axis 48. Additionally, the helmet 12 may also be symmetrical about the medial axis 48 so that the wind is split above and below the helmet 12. The helmet 12 may also be retained on the rider's head by way of straps 54 and clip 56, as discussed above.

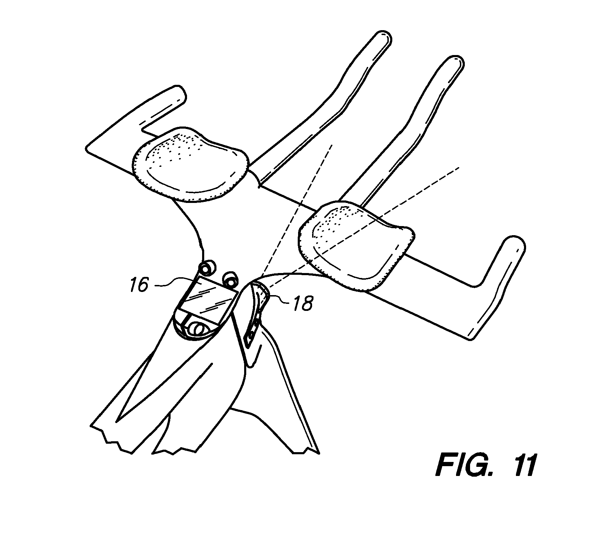

Referring now to Figure 9, the bicycle handlebar video system 20 is shown. The screen 16 is shown as being integrated into the handlebar 22. However, it is also contemplated that the screen 16 may be mounted to the handlebar 22 by way of a flexible shaft 58 as shown in Figure 10. The rider can adjust the position of the screen 16 so that the screen 16 is in the rider's line of sight when the rider's head is in the downward position. The camera 18 is also shown being in a fixed position on the handlebar 22. However, it is also contemplated that the camera 18 may be mounted so as to be adjustable as shown in Figure 11. The rider can adjust the direction of the camera's line of sight as needed. The bicycle handle bar video system 20 enables the rider to maintain his/her head in the downward position as shown in Figures 5 and 7 while riding the road bicycle 24. These and other aspects of the bicycle handlebar video system 20 are discussed in U.S. Pat. App. Ser. No. 12/257,124, filed on October 23, 2008, the entire contents of which is expressly incorporated herein by reference.

The helmets 10, 12 discussed herein may have an exterior shell, a padding disposed under the exterior shell, straps 54 and clips 56 attached to the padding or exterior shell to retain the helmets 10, 12 on the rider's head in event of a crash, and a face mask 52. The face mask 52 may be transparent and may also be pivoted up so that the rider's eyes are exposed to the environment. Additionally, the face mask 52 may be pivoted down so that the wind 15 does not blow air on the rider's eyes. In this manner, the rider's eyes do not become dry which may be a problem when the rider 50 is wearing contact lenses. Additionally, the face mask 52 extends the potential laminar air flow below the helmet 10, 12 during use. The exterior shell of the helmet 10, 12 may be fluid and have no apertures for providing cooling features to the helmet 10, 12.

Referring back to Figure 5, the parabolic shaped helmet 10 may also be modified so as to have a trailing surface 57a instead of a trailing portion 36. The trailing surface 57a may behave in the same manner as that described in relation to Figures 7 and 8. Moreover, referring back to Figure 7, the spherical shaped helmet 12 may have a trailing portion 36a instead of a trailing surface 57. The trailing portion 36a may behave in the same manner as that described in relation to Figures 5 and 6.

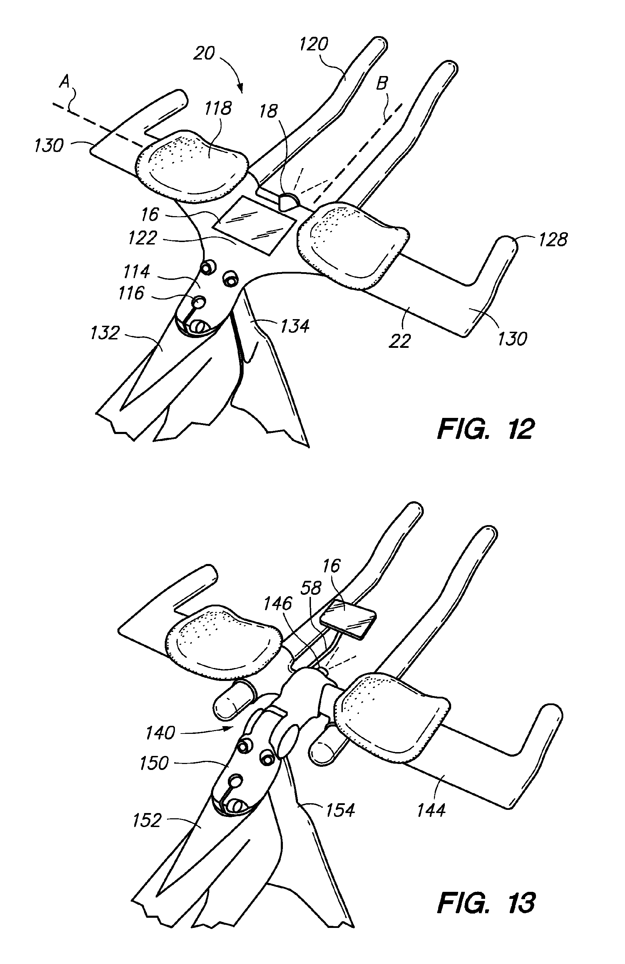

Referring now more particularly to the bicycle video system 20, FIG. 12 illustrates the bicycle video system 110 incorporated into a bicycle handlebar 22. The video system 20 enables the bicyclist to ride the bicycle while maintaining a lowered head position. The lowered head position is associated with the bicyclist looking in a downward direction towards the bicycle handlebar 22. Maintaining the lowered head position as opposed to an elevated head position enhances the aerodynamic efficiency of the bicyclist. Furthermore, the video system 20 enables the bicyclist to maintain a lowered head position by viewing a video display 16 that may display real-time images of views in front of the bicycle similar to a bicyclist with an elevated head position. The elevated head position may correspond to a line of sight directed toward an area to be traversed by the bicycle. When the head is elevated the surface area exposed to wind resistance may be greater than the surface area exposed to wind resistance for a lowered head position. As a result, the surface area exposed to the wind resistance may correspond to a high pressure zone. The surface area blocks the wind resistance and may create a low pressure region behind the head of the bicyclist. The pressure differential has an adverse effect on potential speed and efficiency.

The bicycle handlebar 22 may include an elongated body. The elongated body of the bicycle handlebar 22 may include an airfoil shape to minimize drag as a result of wind interfacing with the bicycle handlebar 22. The bicycle handlebar 22 includes a first end 130 and a second opposing end 130. A pair of handlebar grips 128 may be attached to the opposing ends 130 of the bicycle handlebar 22. In one embodiment, a pair of drop bar grips may be coupled or attached to the opposing ends 130. The drop bar grips extend downward such that when the bicyclist engages the grips the center of mass of the bicyclist is positioned closer to the front wheel of the bicycle. The bicycle handlebar 22 may also define a longitudinal axis A. The pair of handlebar grips 128 may extend perpendicular or orthogonal to the longitudinal axis A. In another embodiment, the pair of handlebar grips 128 is molded with the elongated body of the bicycle handlebar 22 to form a unitary molded bicycle handlebar 22 for attachment to a bicycle frame 132.

The bicycle handlebar 22 may also include a pair of arm pads 118 affixed to a top surface defined by the bicycle handlebar 22. A pair of bar extensions 120 may also be coupled to the elongated body of the bicycle handlebar 22. The pair of bar extensions 120 is configured to extend away from the bicycle handlebar 22 towards an area in front of the bicycle. Both the pair of arm pads 118 and the pair of bar extensions 120 may be used to facilitate a riding position on the bicycle that maximizes aerodynamic efficiency by positioning the center of mass of the bicyclist closer to the front wheel.

The elongated body of the bicycle handlebar 22 may also include a central surface area 122 equidistantly spaced from the opposing ends 130. The central surface area 122 is generally aligned with the bicycle frame 132. The bicycle handlebar 22 is configured for attachment to the bicycle frame 132. The central surface area 122 of the bicycle handlebar 22 is configured to be generally aligned with the center of a bicyclist's body such that the video display 16 is adjacent to the face of the bicyclist when the bicyclist enters a lowered head position. The bicycle handlebar 22 includes a handlebar stem 114 extending from the elongated body. The handlebar stem 14 is adjacent the central surface area 122 of the elongated body of the bicycle handlebar 22 and configured to extend away from the area in front of the bicycle. In one embodiment, the handlebar stem is molded with the elongated body of the bicycle handlebar 22 to form a unitary bicycle handlebar component. In this regard, the bicycle handlebar 22 may be manufactured from one continuous body. The handlebar stem 114 and the elongated body of the bicycle handlebar 22 may define an outer peripheral edge.

The handlebar stem 114 is the portion of the bicycle handlebar 22 that is attached to the bicycle frame 132. In particular, the handlebar stem 114 may be coupled to a front fork 134 attached to the bicycle frame 132. The front fork 134 is the portion of the bicycle that holds the front wheel and allows the bicyclist to steer and balance the bicycle. The bicycle handlebar 22 is attached to the front fork 134 via the handlebar stem 114. The handlebar stem 114 may include a plurality of apertures 116 configured to receive a screw or fastener for coupling the bicycle handlebar 22 to the bicycle frame 132 and the front fork 134. However, other well known methods for coupling the handlebar stem 114 to the bicycle frame 132 and/or the front fork 134 are contemplated.

Still referring to FIG. 12, a video camera 18 is provided. The video camera may be coupled to the peripheral edge of the bicycle handlebar 22. The video camera 18 is positioned such that the video camera 18 may include a line of sight defining a line of sight axis B. The line of sight axis B extends toward an area in front of the bicycle handlebar 22 and may be orthogonal to the longitudinal axis A. The video camera 18 may be installed in a plurality of locations on the bicycle handlebar 22. The video camera 18 may be placed along the outer periphery of the bicycle handlebar 22 as long as the video camera 18 is directed toward the area in front of the bicycle handlebar 22. In one embodiment, the video camera 18 may be embedded within the bicycle handlebar 22 at a point equidistant from the opposing ends 130. In this regard, the video camera 18 is positioned adjacent the central surface area 122 of the elongated body of the bicycle handlebar 22. When the video camera 18 is positioned adjacent the central surface area 122, the optical image of the area in front of the bicycle handlebar 22 may closely resemble the view associated with a bicyclist riding with an elevated head position. Advantageously, the video camera 18 may provide views similar to the views of the bicyclist provided in FIG. 3. The video camera 18 may also incorporate a wide angle lens to capture the area in front of the bicycle handlebar 22 that may be outside the peripheral vision of the bicyclist. In another embodiment, the video camera 18 is coupled to an actuator disposed within the bicycle handlebar 22. The actuator allows the video camera 18 to adjust the direction of the lens. The actuator may be in electrical communication with a sensor configured to send a signal for positioning the video camera 18.

The bicycle video system 20 may include the video display 16 incorporated into the bicycle handlebar 22. The video display 16 is in electrical communication with the video camera 18. The video display 16 may be disposed within the elongated body of the bicycle handlebar 22 adjacent the central surface area 122. The video display 16 may be disposed equidistantly spaced from the opposing ends 130. The video display 16 may be positioned to substantially align with the handlebar stem 114. The position of the video display 16 is configured to be easily viewable by the bicyclist in the lowered head position looking downward towards the bicycle handlebar 22 or the handlebar stem 114. The video display 16 by way of example is a liquid crystal display (LCD). However, other well known technologies including cathode ray tube (CRT), plasma, and the like may be used for the video display 16. In one embodiment, the video display 16 is encapsulated within the elongated body of the bicycle handlebar 22. The encapsulation may protect the video display 16 from scratching, cracking or other types of damage. In another embodiment, the video display 16 is pivotally coupled to the surface of the bicycle handlebar 22. This allows the video display 16 to be adjusted at different angles relative to the bicycle handlebar 22.

The video display 16 is configured to receive a video signal from the video camera 18. Subsequent to receiving the video signal, the video display 16 displays real-time images of the general area in front of the bicycle handlebar 22 generated by the video camera 18. The video display 16 may continuously display the real-time images received from the video camera 18 through the video signal. This may allow the bicyclist to focus on the video display 16 and maintain a streamlined aerodynamically efficient position similar to the position shown in FIG. 4. The video display 16 allows the bicyclist to immediately observe the optical images captured by the video camera 18. The video display 16 may also be configured to display the speed of the bicycle, distance traveled, time elapsed, and various other variables associated with the bicycle and the bicyclist. A battery (not shown) is used to power the video camera 18 and the video display 16. Additionally, a power switch (not shown) is used to power the video camera 18 and the video display 16 on and off. In another embodiment, the bicycle pedals are connected to a power electronics converter. The power electronics converter is in electrical communication with the video camera 18 and the video display 16. The pedaling action produces energy which is converted into the electricity necessary to power both the video camera 18 and the video display 16.

Referring now to FIG. 13, the bicycle video system 110 is incorporated within a bicycle handlebar mount 140 representative of a second embodiment is provided. The bicycle handlebar mount 140 is configured to couple to the bicycle handlebar 144. The handlebar mount 140 may be coupled to the bicycle handlebar 144 at a midpoint along the bicycle handlebar 144, such that the handlebar mount 140 is generally aligned with the handlebar stem 150, the bicycle frame 152, and the front fork 154. The handlebar mount 140 may also be coupled to the handlebar stem 150. The handlebar mount 140 is configured to clamp onto the bicycle handlebar 144. A fastener, screw, hinge, latch or the like may be used for securing the handlebar mount 140 to the bicycle handlebar 144. A video camera 146 is provided on the handlebar mount 140. A portion of the video camera 146 is disposed within the handlebar mount 140. The lens of the video camera 146 is directed to an area in front of the bicycle handlebar 144. The video camera 146 is used to generate a video signal representative of an area in front of the bicycle and the bicycle handlebar 144. In this embodiment, the video camera 146 is not incorporated into the bicycle handlebar 144.

Also provided with the handlebar mount 140 is a flexible shaft 58. The flexible shaft 58 may include a proximal end and a distal end. The proximal end of the flexible shaft 58 is coupled to the handlebar mount 140. The flexible shaft 58 may be configured to extend toward the area in front of the bicycle handlebar 144. The flexible shaft 58 connects the video display 16 to the handlebar mount 140. In this regard, the distal end of the flexible shaft 58 is coupled to the video display 16. The flexible shaft 58 may be configured to bend and maneuver to adjust the positioning of the video display 16. Positioning the video display 16 in an area in front of the handlebar 144 facilitates the riding position of the bicyclist enabling the bicyclist to look downward toward the video display 16 rather than straight ahead at an elevated head position. For races or time trials, the position facilitated by the handlebar mount 140 may produce better results due to the improvement in aerodynamic efficiency. The lowered head position may maximize the aerodynamic efficiency by enabling a streamlined position. Additionally, the farther forward the center of mass of the combined bicycle and bicyclist, the less the front wheel has to move laterally in order to maintain balance. Conversely, the further back the center of mass is located, the more front wheel lateral movement or bicycle forward motion will be required to regain balance. Therefore, the lowered head position facilitated by the handlebar mount 140 minimizes the lateral movement associated with the front wheel of the bicycle. The bicycle handlebar mount 140 includes a battery (not shown) used to power the video camera 146 and the video display 16. Furthermore, the bicycle handlebar mount 140 includes an on/off switch (not shown) for the video camera 146 and the video display. Viewing the video display 16 connected to the handlebar mount 140 by the flexible shaft 58 encourages the bicyclist to lower his head position. The video display 16 is configured to immediately display the real time images captured by the video camera 146. Thus, the bicyclist does not jeopardize the line of sight or peripheral vision associated with a less streamlined elevated head position. The streamlined lowered head position reduces the advantage of competitors using a slipstream strategy in races.

Referring briefly to Fig. 14, the bicycle video system 110 is provided. In this embodiment, the video camera 18 may be coupled to the front fork 134 of the bicycle frame 132. The video display 16 may be coupled to the handlebar stem 114 of the bicycle handlebar 112. The video display 16 is in electrical communication with the video camera 18. The video display 16 may provide images generated by the video camera 18 and transmitted as a video signal. Referring now to Figs. 15-19, a mirror based eyewear viewing system 200 and mirror based handlebar viewing system 202a, b are shown which helps the rider keep his/her head in the lowered position. The eyewear viewing system 200 shown in Figs. 15-15B is shown as being an eyeglass with stem 206 that extend across rearward the wearer's temple and is secured behind the wearer's ears. Alternate systems are also contemplated such as goggles, face masks, shields mounted to helmets, etc. The eyeglass may have left and right optics 208a, b. The left and right optics 208a, b allow the wearer or rider to keep his head in the lowered position yet be able to see upcoming obstacles and terrain. Fig. 15B illustrates a cross sectional view of the right optic 208b. The right optic 208b may have a mirror 210 that reflects the area in front of the rider to the wearer's eyes. Although only a single mirror system is shown in Fig. 15B, the right optic 208b may have additional mirrors, prisms and lens so that the rider can see the upcoming terrain in the right side up orientation at a wide angle and for near or far distance. The left optic 208a may have the same structure as the right optic 208b so that the rider can see the upcoming terrain with both eyes.

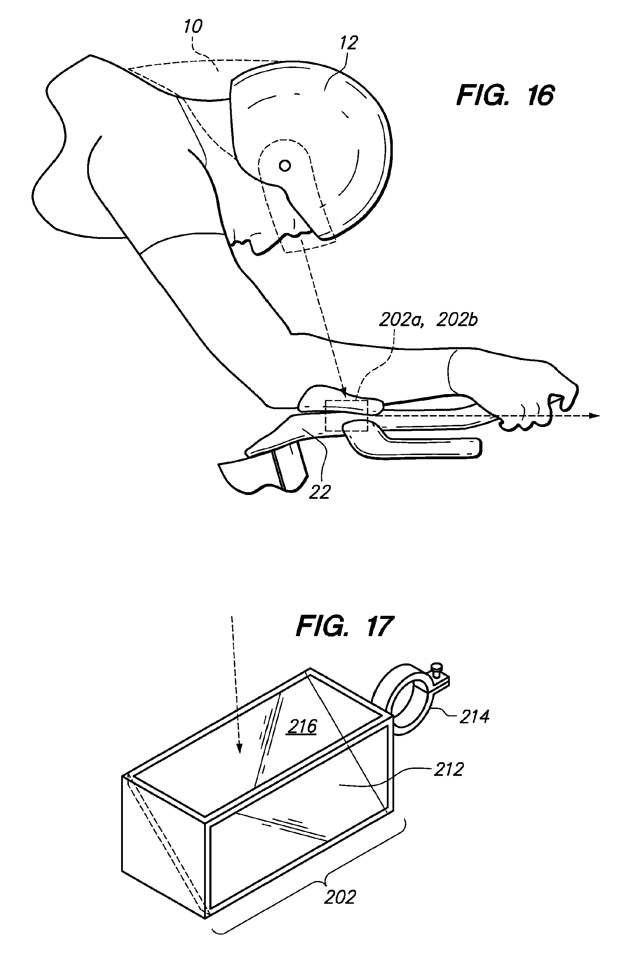

Referring back to Fig. 15, the rider may also utilize the aerodynamic helmets 10, 12 in conjunction with the viewing system 200. During use, the rider is in the tucked in position with his/her head in the lowered position. The rider's head is positioned down so that the aerodynamic helmets 10, 12 facilitate a reduction in the overall drag of the rider and bicycle combination. The front display system 200 enables the rider to keep his/her head in the lowered position while riding to maintain optimal or minimal drag as the rider cuts through the air. The rider can view the upcoming terrain through the front viewing system 200. Referring now to Figs. 16 and 17, the handlebar view system 202a is shown. This viewing system 202 may be mounted to the handlebar area. The viewing system 202a may also be a mirror based system. In particular, the rider may be in the tucked in position with his/her head in the lowered position. While in the tucked in position, the rider's eyes may not have a direct line of sight with the upcoming terrain. The rider can view a viewing area 216 of the front viewing system 202a which shows the upcoming terrain on the mirror 212. Although a single mirror 212 is shown, it is contemplated that the front display system 202a may also have additional mirrors, prisms and lens so that the view of the upcoming terrain to the rider may be right side up at a wide angle and for near or far distance. Referring now to Fig. 17, the viewing system 202a may be mounted on or proximate to the handlebars through a clamp 214.

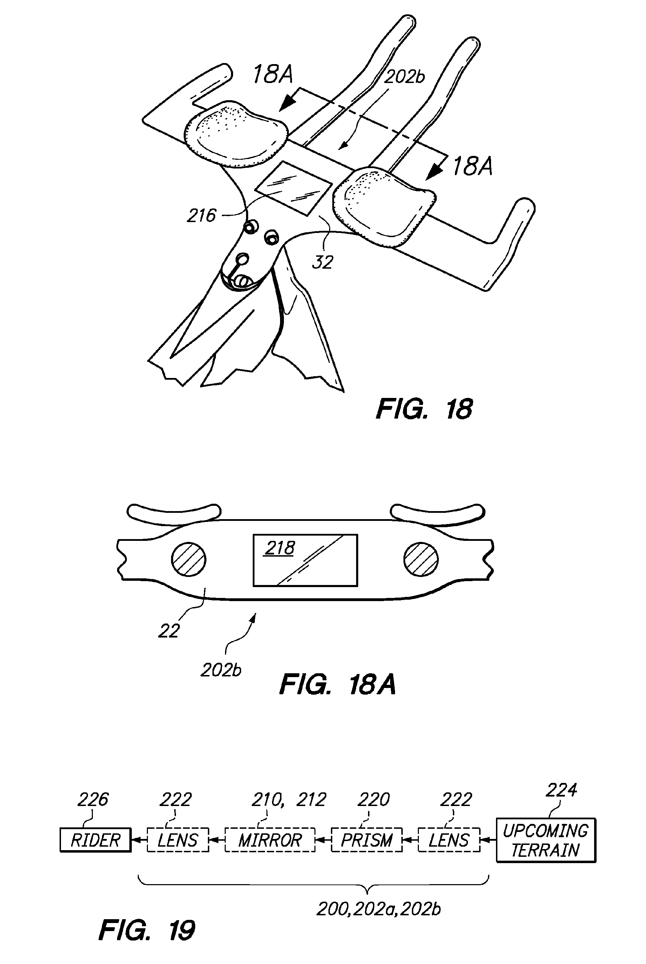

Referring now to Figures 18 and 18A, the front viewing system 202b is shown. The front viewing system 202b is integrated into the handlebar 22. The mirror, prism and other lens may be embedded within the envelope of the handlebar 22 to provide for a form fitted aerodynamic shape. The upcoming terrain may be reflected off of a mirror, prism and lens and visible through the viewing area 216 and located inside of the handlebar 22. The front side of the handlebar 22 shown in Figure 18A may have a screen 218 that conforms to the exterior surface of the handlebar 22 so that the screen 218 does not form any significant discontinuities with respect to the handlebar 22 which may cause an increase in drag. Referring now to Figure 19, a schematic view of the front viewing systems 200, 202a, b is shown. The front viewing systems 200, 202a, b may include at least one mirror, at least one mirror and at least one prism 220, or at least one prism 220. The front viewing systems 200, 202a, b may include multiple mirrors to reflect the upcoming terrain in the upright position. Moreover, the prism 220 may serve the same purpose of flipping the image of the upcoming terrain to the upright orientation for the rider. The mirrors 210, 212 and/or prism 220 may work in conjunction with lens 222 to provide for wide angle viewing of the upcoming terrain 224 to the rider 226. The lens 222, mirrors 210, 212 and prism 220 may be sized and configured and designed so that the upcoming terrain 224 is viewed by the rider 226 in the upright orientation as well as to provide for wide angle viewing and/or far or near distance viewing.

The mirrors 210 and 212 of the eyewear and handlebar viewing systems 200, 202a, b along with the prisms and lens incorporated into the viewing systems 200, 202 may have a parabolic shape so as to provide a wider field of view to the rider. Also, although the viewing system 202a, b is attached to the handlebar 22, it is contemplated that the viewing system 202a, b may be attached to the front fork assembly and positioned so that the rider can see the upcoming terrain while the rider is in the tucked in position or lowered head position.

The viewing system 202 may also be used in conjunction with the helmets 10, 12 discussed above. The helmets 10, 12 enable the rider to maintain a minimal drag coefficient when the rider's head is in the lowered position. The front display system 202 enables the rider to maintain his/her head in the lowered position and inspect the upcoming terrain through the front display system 202.

The helmets 10, 12 may be used in conjunction with any one of the video display system 20 or front viewing systems 200, 202. Also, the helmets 10, 12 may be used without these systems 20, 200, 202. Similarly, the video display system 20 and the front viewing systems 200, 202 may be used separate and apart from the helmets 10, 12 and may be used in conjunction with other helmets or without the helmet.

The above description is given by way of example, and not limitation. Given the above disclosure, one skilled in the art could devise variations that are within the scope and spirit of the invention disclosed herein, including various ways of constructing the strap and clip or various ways of embodying a video system on a bicycle for maximizing the aerodynamic efficiency of a bicyclists' riding position on a bicycle. Further, the various features of the embodiments disclosed herein can be used alone, or in varying combinations with each other and are not intended to be limited to the specific combination described herein. Thus, the scope of the claims is not to be limited by the illustrated embodiments.

## Claims

1. An aerodynamic bicycle helmet for decreasing coefficient of drag when a head of a rider is in a down position, the helmet comprising:
a cushion with a concave cavity for receiving the head of the rider;
a strap attached to the cushion for maintaining the cushion on the head of rider in the event of a crash;
an exterior shell disposed over the cushion, the exterior shell having a leading portion with a parabolic or spherical configuration, the leading portion positioned on a top portion of the head of the rider when the helmet is worn by the rider.

2. The helmet of Claim 1 wherein the exterior shell is continuous and smooth.

3. The helmet of Claim 1 wherein the aerodynamic leading portion is symmetrical about a medial axis which is generally aligned to a spine of the rider when the helmet is worn by the rider.

4. The helmet of Claim 1 wherein a tail portion of the external shell is aerodynamically blended to a back surface of the rider.

5. The helmet of Claim 1 wherein a trailing surface of the external shell follows a contour of the rider's head.

6. The helmet of Claim 1 wherein the aerodynamic leading portion is parabolic or symmetrical.

7. A bicycle riding system comprising:
an aerodynamic bicycle helmet according to claims 1-6;
a bicycle comprising:
a front wheel;
a rear wheel;
a frame with the front and rear wheels attached to the frame;
a handlebar attached to the front wheel and the frame for steering the front wheel;
a means for showing a front view of the bicycle path to the rider while the rider maintains his/her head in the down position.

8. The system of Claim 7 wherein the means for showing includes a video system with a camera positioned to electronically capture the front view of the bicycle path and a video screen to display the electronically capture front view of the bicycle path.

9. The system of Claim 7 wherein the means for showing includes a mirror based front viewing system for enabling the rider to view upcoming terrain while the rider's head is in the lower position.

10. The system of Claim 9 wherein the mirror based front viewing system is an eyeglass incorporating a mirror that is positioned to reflect the upcoming terrain of the rider when the rider's head is in the lowered position.

11. The system of Claim 9 wherein the mirror based front viewing system is mountable to a handlebar region of a bicycle with a mount, and the front viewing system reflects the upcoming terrain to the rider when the rider's head is in the lowered position.

12. A bicycle viewing system for viewing a front path of a bicycle while a rider's head is in a lowered position according to claim 7, the system comprising:
a means for reflecting upcoming terrain off of a mirror so that the rider can view upcoming terrain when the rider's head is in the lowered position;
a means for securing the left and right optics in front of the wearer's eyes.

13. The system of Claim 12 wherein the means for securing comprises an eyeglass frame with the left and right optics attached thereto.

14. The system of Claim 12 wherein the means for securing comprises a visor of a helmet.

15. The system of Claim 12 wherein the means for reflecting includes:
• left and right optics each having at least one mirror oriented so that the rider can view upcoming terrain when the rider's head is in the lowered position
• at least one mirror mountable to the bicycle proximate a handlebar region of the bicycle, the mirror being oriented so that the rider can view upcoming terrain when the rider's head is in the lowered position.
